# EUROPÄISCHE PATENTSCHRIFT

(11) **EP 2 189 057 B1**
(45) Veröffentlichungstag und Bekanntmachung des Hinweises auf die Patenterteilung: **30.03.2011**
(21) Anmeldenummer: 08169896.1
(22) Anmeldetag: 25.11.2008
(51) Int. Cl.: A01G 25/00, A01G 25/02

(54) **Verfahren zum Herstellen von Tropfbewässerungsrohren**
Method of manufacturing drip irrigation tubes
Procédé de fabrication de tuyaux d'irrigation goutte à goutte

(43) Veröffentlichungstag der Anmeldung: 26.05.2010
(73) Patentinhaber: THE Machines Yvonand SA, 1462 Yvonand (CH)
(72) Erfinder: Kertscher, Eberhard, 1462, Yvonand (CH)
(74) Vertreter: BOVARD AG

(56) Entgegenhaltungen:
- EP-A- 0 715 926
- US-A- 4 254 916
- US-A1- 2003 214 083

## Beschreibung

Die vorliegende Erfindung bezieht sich auf ein Verfahren zum Herstellen von Tropfbewässerungsrohren, bei welchem ein Rohrkörper extrudiert wird, in welchen Dosierelemente eingesetzt und mit der Innenseite des Rohrkörpers verbunden werden, in welchen Rohrkörper im Bereich der Dosierelemente mit einer Laserbohreinrichtung mit einer vorgegebenen Strahlenintensität jeweils Auslassöffnungen angebracht werden, durch welche das im Rohrkörper geführte Wasser tropfweise austreten kann.

Derartige Verfahren zur Herstellung von Tropfbewässerungsrohren sind in vielfältiger Weise bekannt, siehe z.B. Dokument EP 0 715 926 A1. Nach dem Extrusionsvorgang des Rohrkörpers und dem Einsetzen der Dosierelemente in diesen Rohrkörper, wobei die Dosierelemente mit dem Rohrkörper verbunden werden, wird der Rohrkörper an einer Einrichtung vorbeigeführt, mit welcher im Rohrkörper Auslassöffnungen angebracht werden, die bezüglich der Dosierelemente genau positioniert sein müssen. Zum Anbringen derartiger Auslassöffnungen sind verschiedene Verfahren möglich, diese Auslassöffnungen können beispielsweise durch eine mechanische Bohreinrichtung, durch ein rotierendes Schneidmesser, insbesondere wenn die Auslassöffnungen aus schlitzförmigen Schnitten bestehen, oder mittels Laser angebracht werden. Besonders geeignet sind hierbei Nd/YAG-Laser oder CO₂-Laser.

Diese Laserbohreinrichtungen sind mit einer Optikeinrichtung versehen, mittels welcher der Laserstrahl in bekannter Weise gesteuert und/oder in die gewünschte Form gebracht werden kann (beispielsweise ringförmig oder u-förmig). Der zum Anbringen der Auslassöffnungen verwendete Laserstrahl muss eine vorgegebene Strahlenintensität haben, damit beim Durchschneiden des Rohrkörpers das jeweils darunter angebrachte Dosierelement nicht derartig beschädigt wird, dass an diesem Dosierelement eine undichte Stelle auftritt. In bekannter Weise ist hierbei die Strahlenintensität von der Dicke der durchzuschneidenden Rohrwandung, vom Material dieser Rohrwandung und gegebenenfalls von der Geschwindigkeit abhängig, mit welcher der Laserstrahl über die Rohrwandung zu dessen Durchschneidung geführt wird.

Derartig hergestellte Tropfbewässerungsrohre können an der Oberfläche auch beschriftet werden, beispielsweise kann eine Typenbezeichnung angegeben werden, die verschiedene Hinweise umfassen kann, es kann auch der Hersteller aufgeführt werden usw.. Zum Anbringen derartiger Beschriftungen wird das hergestellte Rohr einem weiteren Bearbeitungsvorgang unterzogen, bei welchem die Beschriftung aufgedruckt, eingeprägt oder auf eine andere Art angebracht wird. Dieser zusätzliche Bearbeitungsvorgang ist zeitaufwändig und erfordert eine zusätzliche Beschriftungsanlage, was als nachteilig erachtet wird.

Die Aufgabe der vorliegenden Erfindung besteht somit darin, ein Verfahren zum Herstellen und Beschriften derartiger Tropfbewässerungsrohre zu schaffen, welches möglichst einfach ist und welches keine zusätzlichen Einrichtungen erfordert.

Erfindungsgemäss erfolgt die Lösung dieser Aufgabe dadurch, dass zwischen den Bohrvorgängen die Strahlenintensität der Laserbohreinrichtung reduziert wird, dass über eine mit der Laserbohreinrichtung zusammenwirkende Laseroptik der Laserstrahl gesteuert über die Oberfläche des Tropfbewässerungsrohres geführt wird und auf dieser Oberfläche alphanumerische Zeichen eingebrannt werden.

Durch dieses Verfahren kann die bereits in der Anordnung zur Herstellung von Tropfbewässerungsrohren vorhandene Laserbohreinrichtung auch für das Anbringen der Beschriftung verwendet werden, was die Herstellung der Tropfbewässerungsrohre inklusive Beschriftung sehr vereinfacht, wodurch Zeit und Kosten gespart werden können.

In vorteilhafter Weise wird der Rohrkörper mit den darin eingesetzten Dosierelementen kontinuierlich an der Laserbohreinrichtung vorbeigeführt, der Laserstrahl wird während des Arbeitseinsatzes über die Laseroptik der Rohrkörperbewegung nachgeführt.

Im Bereich der Laserbearbeitung wird der Rohrkörper auf einer Abstützrolle abgestützt und umschlingt diese mindestens teilweise. Dadurch wird erreicht, dass der Rohrkörper in diesem Bereich exakt geführt ist, das mindestens teilweise Umschlingen der Abstützrolle durch den Rohrkörper verhindert zudem eine Längenänderung des Rohrkörpers durch gegebenenfalls entstehende unterschiedliche Zugbeanspruchungen beim Fortbewegen des Rohrkörpers.

In vorteilhafter Weise wird über Sensormittel die Position der Dosierelemente zur ortsgenauen Anbringung der jeweiligen Auslassöffnung im Rohrkörper festgestellt. Dies ermöglicht, dass die Auslassöffnung im Rohrkörper auch dann korrekt angebracht wird, wenn beispielsweise die Dosierelemente unterschiedliche Abstände voneinander aufweisen.

Aufgrund dieser festgestellten Position der jeweiligen im Rohrkörper anzubringenden Auslassöffnungen kann auch die Position der anzubringenden alphanumerischen Zeichen festgelegt werden, wodurch gewährleistet ist, dass Bohrvorgang und Anbringen von alphanumerischen Zeichen sich nicht gegenseitig stören können.

In vorteilhafter Weise wird die Positionierung des Rohrkörpers bezüglich der Laserbohreinrichtung quer zur Längsrichtung des Rohrkörpers durch Verstellen von vor und hinter der Abstützrolle angeordneten Führungsrollen eingestellt, wodurch diese Positionierung sehr einfach ausgeführt werden kann.

In vorteilhafter Weise wird der Abstand zwischen der Laserbohreinrichtung und dem zu bearbeitenden Rohrkörper durch Anheben bzw. Absenken der Abstützrolle eingestellt, auch dies kann sehr einfach ausgeführt werden.

Ein erfindungsgemässes Verfahren zum Herstellen von Tropfbewässerungsrohren wird nachfolgend anhand der beiliegenden Zeichnungen beispielhaft näher erläutert.

Es zeigt
Fig. 1 in schematischer Darstellung eine Ansicht auf eine Anlage zur Herstellung von Tropfbewässerungsrohren;
Fig. 2 eine Draufsicht auf das Rohr im Bereich der Abstützrolle, mit angebrachten Auslassöffnungen und Beschriftungen;
Fig. 3 eine Ansicht von vorn auf die Abstütz- und Führungsrollen, mit eingelegtem Tropfbewässerungsrohr; und
Fig. 4 eine Ansicht auf die Abstützrolle und die Führungsrollen mit der Laserbohreinrichtung.

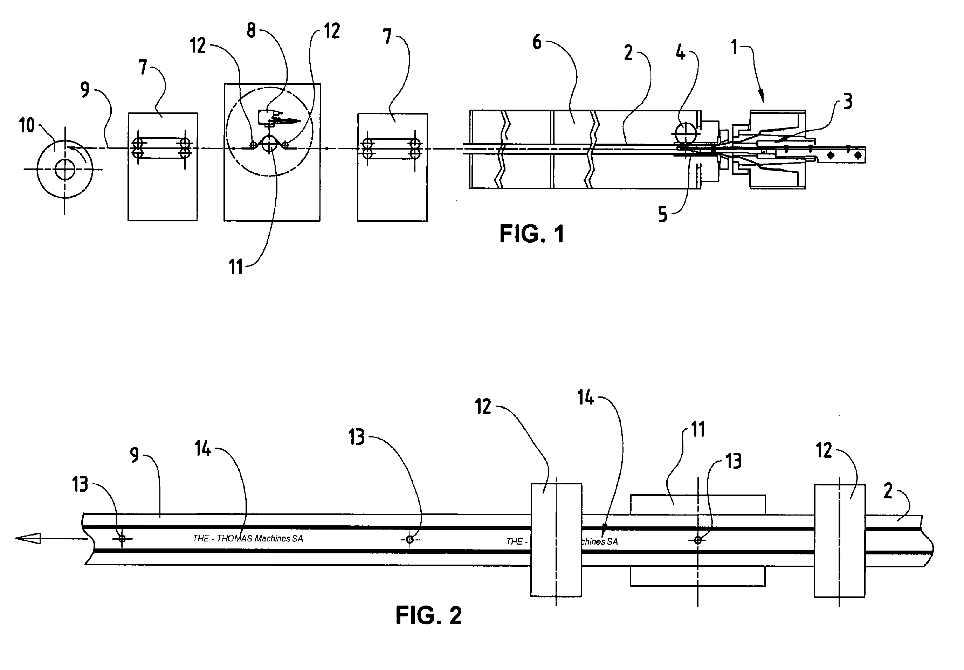

Fig. 1 zeigt in schematischer Darstellung eine Anordnung zur Herstellung von Tropfbewässerungsrohren. In einer Extrudiereinrichtung 1 wird fortlaufend ein Rohrkörper 2 extrudiert. In diesen Rohrkörper 2 werden über eine Zuführeinrichtung 3 in bekannter Weise Dosierelemente in den Rohrkörper 2 eingeführt und mit diesem verbunden. Zum Anpressen dieser Dosierelemente im Rohrkörper 2 dient eine Anpressrolle 4, die aussenseitig mit dem Rohrkörper 2 in Kontakt steht. Die zugeführten Dosierelemente werden auf der inneren Seite des Rohrkörpers 2 über eine Führungsschiene 5 gegen den noch weichen Rohrkörper gepresst und mit diesem verbunden.

Der mit den Dosierelementen versehene Rohrkörper 2 wird dann durch Kühleinrichtungen 6 geführt, durch den Abkühlvorgang verfestigt sich der Rohrkörper 2. Über Vorschubvorrichtungen 7 wird der Rohrkörper 2 durch die Laserbohreinrichtung 8 geführt, mit welcher in den Rohrkörper 2 in der bezüglich der Dosierelemente richtigen Position die Auslassöffnungen angebracht werden, und mit welcher beispielsweise der Rohrkörper beschriftet werden kann, wie später im Detail noch beschrieben wird. Das so fertig gestellte Tropfbewässerungsrohr 9 kann anschliessend auf einer Wickelvorrichtung 10 aufgewickelt werden, die entsprechenden Wickelrollen können dann an die Benutzer ausgeliefert werden.

Wie den Fig. 1 und 2 entnommen werden kann, wird der Rohrkörper 2 im Bereich der Laserbohreinrichtung über eine Abstützrolle 11 geführt, vor und hinter dieser Abstützrolle 11 ist jeweils eine Führungsrolle 12 angeordnet, derart, dass der Rohrkörper 2 die Abstützrolle 11 um einen Teil deren Umfangs umschlingt. Im mittleren Teil des Umschlingungsbereichs werden die Auslassöffnungen 13 in den Rohrkörper 2 durch die Laserbohreinrichtung 8 eingebracht, ebenfalls werden in diesem Bereich die aus Fig. 2 ersichtlichen alphanumerischen Zeichen 14 durch die Laserbohreinrichtung 8 auf dem Rohrkörper 2 angebracht, wie später noch im Detail beschrieben wird.

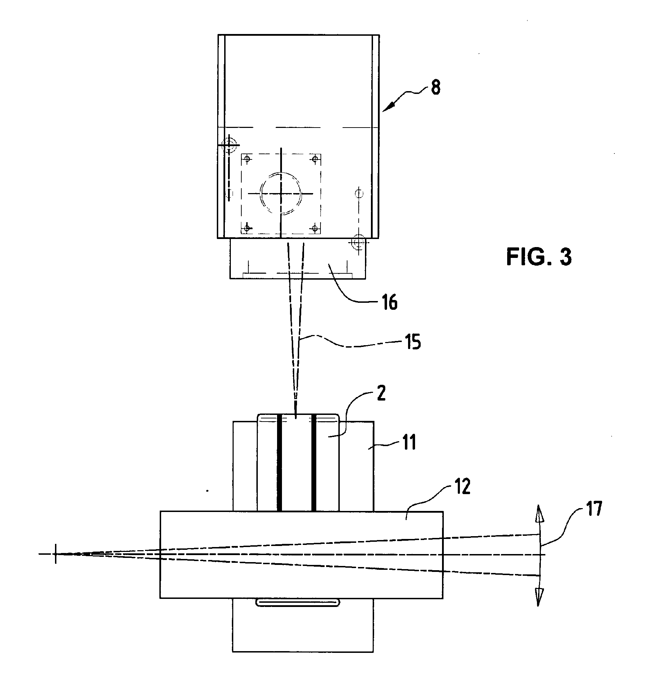

Wie aus Fig. 3 ersichtlich ist, wird in der Laserbohreinrichtung 8 in bekannter Weise ein Laserstrahl 15 erzeugt, der über eine Laseroptik 16 auf die Oberfläche des Rohrkörpers 2 gelenkt wird, welcher Rohrkörper 2 auf der Führungsrolle 12 abgestützt ist und diese teilweise umschlingt. Die Laseroptik 16 ist einerseits so ausgebildet, dass der Laserstrahl 15 in bekannter Weise auf den Auftreffpunkt auf dem Rohrkörper 2 fokussiert wird, sodass in diesem Punkt die grösste Strahlungsdichte erreicht wird, wodurch eine optimale Schneid- bzw. Bohrleistung erhalten wird. In bekannter Weise wird über eine nicht dargestellte Sensoreinrichtung die Position des jeweiligen Dosierelementes innerhalb des Rohrkörpers festgestellt, über nicht dargestellte Steuermittel wird die Laserbohreinrichtung im richtigen Zeitpunkt aktiviert, sodass an der richtigen Position im Rohrkörper 2 die Auslassöffnung 13 angebracht werden kann. Diese Auslassöffnung kann unterschiedliche Formen aufweisen, sie kann ein kreisrundes Loch sein, wie dies in Fig. 2 dargestellt ist, diese Auslassöffnung könnte aber auch nur als Schnitt von bestimmter Länge ausgebildet sein, man könnte die Auslassöffnung auch als zwei sich kreuzende Schnitte ausbilden, abhängig von der Anwendungsart und von der Wanddicke des Rohrkörpers. Über die Laseroptik 16 wird der Laserstrahl 15 ebenfalls in bekannter Weise entsprechend geführt.

Wie ebenfalls aus Fig. 3 ersichtlich ist, kann der durch die Laserbohreinrichtung 8 zu bearbeitende Rohrkörper 2 auf der Abstützrolle 11 seitlich positioniert werden, was dadurch erreicht wird, dass die Führungsrollen 12 in ihrer Winkellage verstellt werden können, dargestellt durch Pfeil 17. Je nach Winkellage der Führungsrollen 12 lässt sich der Durchlauf des Rohrkörpers 2 über die Abstützrolle 11 bezüglich der Laserbohreinrichtung 8 seitlich positionieren.

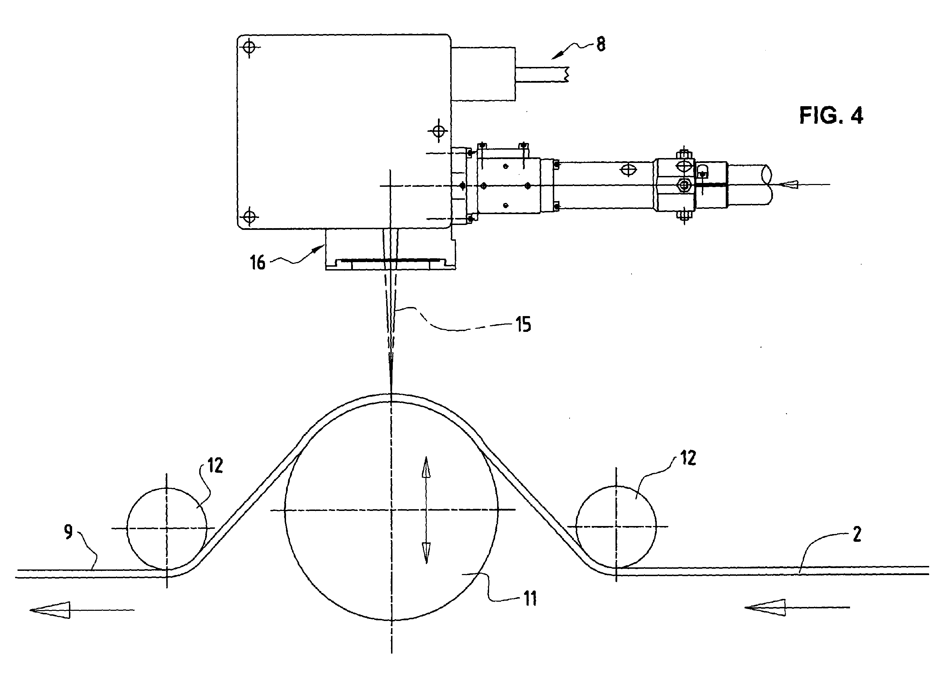

Aus Fig. 4 ist die Laserbohreinrichtung 8 ersichtlich, der Rohrkörper 2, läuft über die Abstützrolle 11, geführt durch die beiden Führungsrollen 12, sodass der Rohrkörper 2 die Abstützrolle 11 um einen bestimmten Bereich umschlingt. Um den Abstand des Rohrkörpers 2 zur Laserbohreinrichtung 8 einstellen zu können, ist die Abstützrolle 11 verstellbar gelagert, sodass sie auf die Laserbohreinrichtung 8 bzw. von dieser weg verfahren werden kann und in der gewünschten Position arretierbar ist. Indem der Rohrkörper 2 die Abstützrolle 11 um einen bestimmten Bereich umschlingt, wird dieser in optimaler Weise abgestützt, eine Veränderung der Länge des Rohrkörpers in diesem Bereich durch Längenausdehnung wird dadurch vermieden, die Arbeitsvorgänge durch die Laserbohrvorrichtung können präzise ausgeführt werden.

Zum Anbringen der Auslassöffnungen 13 (Fig. 2) im Rohrkörper 2 wird mit einer vorgegebenen Strahlenintensität gearbeitet. Wenn eine Auslassöffnung angebracht worden ist, kann die Strahlenintensität der Laserbohreinrichtung im folgenden Arbeitseinsatz reduziert werden, über die Laseroptik und entsprechende Steuermittel kann danach der Laserstrahl 15 über die Oberfläche des Rohrkörpers 2 in bekannter Weise geführt werden, sodass auf dieser Oberfläche des Rohrkörpers 2 alphanumerische Zeichen 14 (Fig. 2) eingebrannt werden können. Diese alphanumerischen Zeichen 14 können unterschiedliche Informationen enthalten, beispielsweise Rohrdurchmesser, Typ des Tropfbewässerungsrohres, Hersteller usw.. Wenn auf dem weiterlaufenden Rohrkörper 2 danach die nächste Auslassöffnung 13 angebracht werden soll, kann die Strahlenintensität des Laserstrahls 15 wieder entsprechend erhöht werden, sodass der Schneidvorgang ausgeführt werden kann.

Da über die Sensormittel die Position der Dosierelemente im Rohrkörper 2 genau festgestellt werden können, und somit auch genau festgelegt ist, wo die entsprechenden Auslassöffnungen 13 im Rohrkörper anzubringen sind, können auch die alphanumerischen Zeichen, die auf die Oberfläche des Rohrkörpers eingebrannt werden, zwischen den Auslassöffnungen in bekannter Weise entsprechend positioniert werden.

Mit dieser Ausgestaltung der Erfindung wird ein Verfahren erhalten, mit welchem ohne grösseren, zusätzlichen Aufwand mit einer Anlage zum Herstellen von Tropfbewässerungsrohren gleichzeitig auch Beschriftungen dieser Tropfbewässerungsrohre vorgenommen werden können. Das Herstellen der Tropfbewässerungsrohre und das Anbringen der Beschriftungen dieser Rohre erfolgen in ein und demselben Arbeitsgang, es sind keine weitere, zusätzliche Vorrichtungen erforderlich, das Verfahren kann demzufolge sehr einfach und kostengünstig angewendet werden.

## Patentansprüche

1. Verfahren zum Herstellen von Tropfbewässerungsrohren (9), bei welchem ein Rohrkörper (2) extrudiert wird, in welchen Dosierelemente eingesetzt und mit der Innenseite des Rohrkörpers (2) verbunden werden, in welchen Rohrkörper (2) im Bereich der Dosierelemente mit einer Laserbohreinrichtung (8) mit einer vorgegebenen Strahlenintensität jeweils Auslassöffnungen (13) angebracht werden, durch welche das im Rohrkörper (2) geführte Wasser tropfweise austreten kann, **dadurch gekennzeichnet, dass** zwischen den Bohrvorgängen die Strahlenintensität der Laserbohreinrichtung (8) reduziert wird, dass über eine mit der Laserbohreinrichtung (8) zusammenwirkende Laseroptik (16) der Laserstrahl (15) gesteuert über die Oberfläche des Tropfbewässerungsrohres (9) geführt wird und auf dieser Oberfläche alphanumerische Zeichen (14) eingebrannt werden.

2. Verfahren nach Anspruch 1, **dadurch gekennzeichnet, dass** der Rohrkörper (2) mit den darin eingesetzten Dosierelementen kontinuierlich an der Laserbohreinrichtung (8) vorbeigeführt wird.

3. Verfahren nach Anspruch 1 oder 2, **dadurch gekennzeichnet, dass** im Bereich der Laserbearbeitung der Rohrkörper (2) auf einer Abstützrolle (11) abgestützt wird und diese mindestens teilweise durch den Rohrkörper (2) umschlungen wird.

4. Verfahren nach einem der Ansprüche 1 bis 3, **dadurch gekennzeichnet, dass** über Sensormittel die Position der Dosierelemente zur ortsgenauen Anbringung der jeweiligen Auslassöffnung (13) im Rohrkörper (2) festgestellt wird.

5. Verfahren nach Anspruch 4, **dadurch gekennzeichnet, dass** aufgrund der festgestellten Position der jeweiligen im Rohrkörper (2) anzubringenden Auslassöffnungen (13) die Position der anzubringenden alphanumerischen Zeichen (14) festgelegt wird.

6. Verfahren nach einem der Ansprüche 3 bis 5, **dadurch gekennzeichnet, dass** die Positionierung des Rohrkörpers (2) bezüglich der Laserbohreinrichtung (8) quer zur Längsrichtung des Rohrkörpers (2) durch Verstellen von vor und hinter der Abstützrolle (11) angeordnete Führungsrollen (12) eingestellt wird.

7. Verfahren nach einem der Ansprüche 3 bis 6, **dadurch gekennzeichnet, dass** der Abstand zwischen der Laserbohreinrichtung (8) und dem zu bearbeitenden Rohrkörper (2) durch Anheben bzw. Absenken der Abstützrolle (11) eingestellt wird.

## Claims

1. Method of producing drip irrigation tubes (9), in which a tube body (2) is extruded, in which body metering elements are inserted and are connected to the inner surface of the tube body (2), in which tube body (2) outlet apertures (13) are made in each case in the region of the metering elements using a laser boring device (8) with a specified radiation intensity, through which apertures the water guided in the tube body (2) can escape dropwise, **characterised in that** the radiation intensity of the laser boring device (8) is reduced between the boring procedures, **in that**, via a laser lens (16) cooperating with the laser boring device (8), the laser beam (15) is led in a controlled way over the surface of the drip irrigation tube (9), and alphanumerical symbols (14) are burned on this surface.

2. Method according to claim 1, **characterised in that** the tube body (2) with the metering elements inserted therein is led past the laser boring device (8) in a continuous way.

3. Method according to claim 1 or 2, **characterised in that** in the region of the laser processing the tube body (2) is supported on a support roller (11), and this support roller is wrapped around at least partially by the tube body (2).

4. Method according to one of the claims 1 to 3, **characterised in that**, for precisely positioned making of each outlet aperture (13) in the tube body (2), the position of the metering elements is determined via sensor means.

5. Method according to claim 4, **characterised in that** the position for the alphanumerical symbols (14) to be applied can be determined on the basis of the determined position of the respective outlet apertures (13) to be made in the tube body (2).

6. Method according to one of the claims 3 to 5, **characterised in that** the positioning of the tube body (2) with respect to the laser boring device (8) is adjusted transversely to the longitudinal direction of the tube body (2) through adjustment of guide rollers (12) disposed in front of and behind the support roller (11).

7. Method according to one of the claims 3 to 6, **characterised in that** the spacing between the laser boring device (8) and the tube body (2) to be processed is adjusted by raising or respectively lowering of the support roller (11).

## Revendications

1. Procédé de fabrication de tuyaux d'irrigation goutte à goutte (9), où un corps tubulaire (2) est extrudé dans lequel des éléments de dosage sont utilisés et reliés à la face interne du corps tubulaire (2), corps tubulaires (2) dans lequel dans la zone des éléments de dosage, des ouvertures de sortie (13) sont respectivement ménagées avec un dispositif de perçage au laser (8) à une intensité de rayon prédéterminée, ouvertures par lesquelles l'eau guidée dans le corps tubulaire (2) peut sortir goutte à goutte, **caractérisé en ce qu'**entre les opérations de perçage, l'intensité de rayon du dispositif de perçage au laser (8) est réduite, **en ce que** le rayon laser (15) est commandé par une optique de laser (16) coopérant avec le dispositif de perçage au laser (8) et est guidé sur la surface du tuyau d'irrigation goutte à goutte (9) et des signes alphanumériques (14) sont gravés sur la surface.

2. Procédé selon la revendication 1, **caractérisé en ce que** le corps tubulaire (2) avec les éléments de dosages se trouvant à l'intérieur est passé en continu le long du dispositif de perçage au laser (8).

3. Procédé selon la revendication 1 ou 2, **caractérisé en ce que** dans la zone du traitement au laser, le corps tubulaire (2) repose sur une poulie de soutien (11) et est entouré au moins partiellement à travers le corps tubulaire (2).

4. Procédé selon l'une des revendications 1 à 3, **caractérisé en ce que** par des moyens de capteur, il est possible de déterminer la position des éléments de dosage pour une application précise de l'ouverture de sortie respective (13) dans le corps tubulaire (2).

5. Procédé selon la revendication 4, **caractérisé en ce que** la position des signes alphanumériques (14) à appliquer est déterminée sur la base de la position déterminée des ouvertures de sortie (13) à ménager dans le corps tubulaire (2).

6. Procédé selon l'une des revendications 3 à 5, **caractérisé en ce que** le positionnement du corps tubulaire (2) est réglé par rapport au dispositif de perçage au laser (8) transversalement à la direction du corps tubulaire (2) par déplacement de poulies de guidage (12) disposées devant ou derrière des poulies de soutien (11).

7. Procédé selon l'une des revendications 3 à 6, **caractérisé en ce que** la distance entre le dispositif de perçage laser (8) et le corps tubulaire à usiner (2) est réglée par soulèvement ou abaissement de la poulie de soutien (11).
